# EUROPEAN PATENT APPLICATION

(11) **EP 3 989 418 A1**
(43) Date of publication of application: **27.04.2022**
(21) Application number: 20827841.6
(22) Date of filing: 09.06.2020
(51) Int. Cl.: H02K 13/00, A47L 9/00, F04D 29/00, H02K 5/14, H02K 7/14, H02K 23/00

(54) **ELECTRIC MOTOR AND ELECTRIC BLOWER**

(30) Priority: 21.06.2019 JP 2019115664
(71) Applicant: Panasonic Intellectual Property Management Co., Ltd., Osaka-shi, Osaka 540-6207 (JP)
(72) Inventor: YOSHIOKA, Yuuki, Osaka-shi, Osaka 540-6207 (JP); FUJITA, Katsutoshi, Osaka-shi, Osaka 540-6207 (JP); YORINO, Tomoko, Osaka-shi, Osaka 540-6207 (JP)
(74) Representative: SSM Sandmair
(86) International application number: PCT/JP2020/022750
(87) International publication number: WO 2020/255807

(57) **Abstract**

An electric motor (2) includes: a rotor (10) which includes a shaft (13) and a commutator (14) attached to the shaft (13); a brush (60) which includes a first end portion that is in contact with the commutator (14) and a second end portion positioned opposite to the first end portion; a brush holder (70) which holds the brush (60); and a constant load spring (80) which presses the brush (60) against the commutator (14). The constant load spring (80) includes a coil portion (81) that is in contact with the second end portion of the brush (60) and an outer end portion (82) fixed to the brush holder (70).

## Description

### [Technical Field]

The present disclosure relates to an electric motor and an electric blower.

### [Background Art]

Electric motors mounted in household electric vacuum cleaners include brushed commutator motors and brushless motors. Of these, the brushless motors require electronic components for driving, drive circuits, and the like, so that the electric motors as a whole become expensive. In view of the above, use of a brushed commutator motor, which is less expensive than a brushless motor, in an electric vacuum cleaner has been considered so as to improve the performance of the electric vacuum cleaner.

In the commutator motor, brush springs are used to press the brushes against the commutator. Each brush spring applies a pressing force to the brush by using the elasticity of the spring. Conventionally, a coil spring or a torsion spring has been used as a brush spring for a commutator motor.

However, with a coil spring or a torsion spring, the difference between the pressing force before the brush is worn out (initial force) and the pressing force after the brush is worn out (final force) is large. Hence, the initial force is required to be set high enough to ensure a certain level of final force or higher. Accordingly, in the initial stage, the friction between the brush and the commutator increases when the rotor rotates, leading to an increased sliding loss of the brush. As a result, the efficiency of the electric motor decreases and the life of the brush decreases.

In view of the above, in order to reduce the difference between the initial force and the final force and apply a uniform pressing force (load) to the brush, a technique has been conventionally proposed which uses a constant load spring as a brush spring (for example, Patent Literature (PTL) 1).

### [Citation List]

### [Patent Literature]

[PTL 1] CD-ROM of Japanese Utility Model Application No. H03-077375 (Japanese Unexamined Utility Model Application Publication No. H05-029268)

### [Summary of Invention]

### [Technical Problem]

However, the brush spring disclosed in PTL 1 requires two fixing points for fixing the brush spring, causing a problem that the brush spring cannot be fixed simply.

The present disclosure has been conceived to solve such a problem. An object of the present disclosure is to provide an electric motor, an electric blower, and the like which are capable of simply fixing a constant load spring even when the constant load spring is used as a brush spring.

### [Solution to Problem]

In order to achieve the above object, one aspect of an electric motor according to the present disclosure includes: a rotor which includes a shaft and a commutator, the shaft extending in an axial center direction, the commutator being attached to the shaft; a brush which includes a first end portion and a second end portion in a radial direction that intersects with the axial center direction, the first end portion being in contact with the commutator, the second end portion being positioned opposite to the first end portion; a brush holder which holds the brush such that the brush moves in the radial direction; and a constant load spring which presses the brush against the commutator, wherein the constant load spring includes a coil portion and an outer end portion, the coil portion being in contact with the second end portion of the brush, the outer end portion being fixed to the brush holder.

One aspect of an electric blower according to the present disclosure includes: the electric motor; and a rotating fan attached to the shaft of the electric motor.

### [Advantageous Effects of Invention]

Even when a constant load spring is used as a brush spring, the constant load spring can be simply fixed.

### [Brief Description of Drawings]

[FIG. 1]

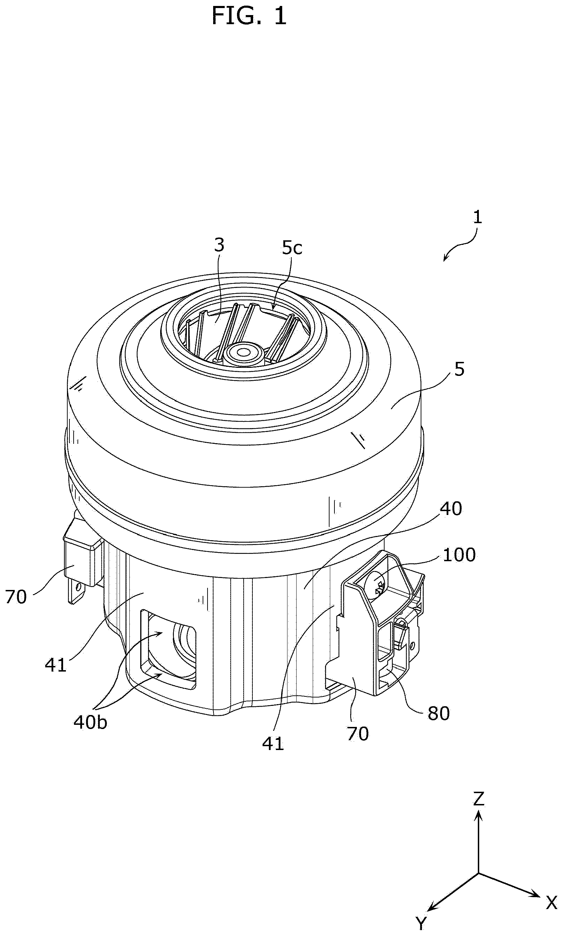

   FIG. 1 is a perspective view of an electric blower according to an embodiment when viewed from above.
[FIG. 2]

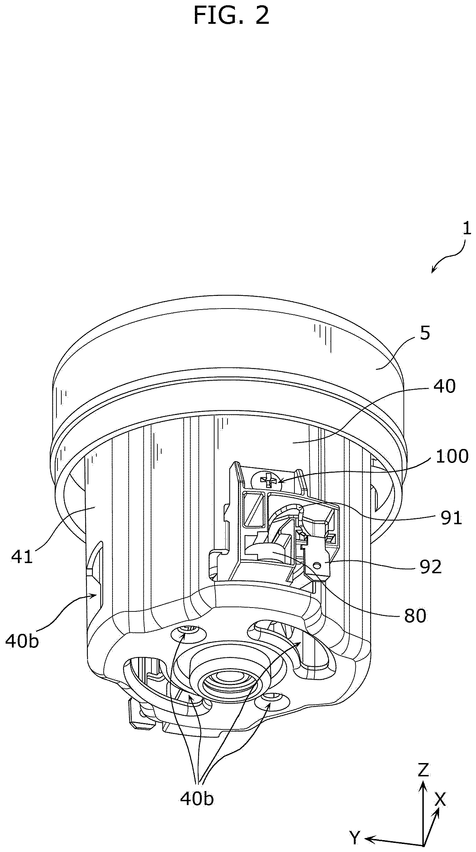

   FIG. 2 is a perspective view of the electric blower according to the embodiment when viewed from below.
[FIG. 3]

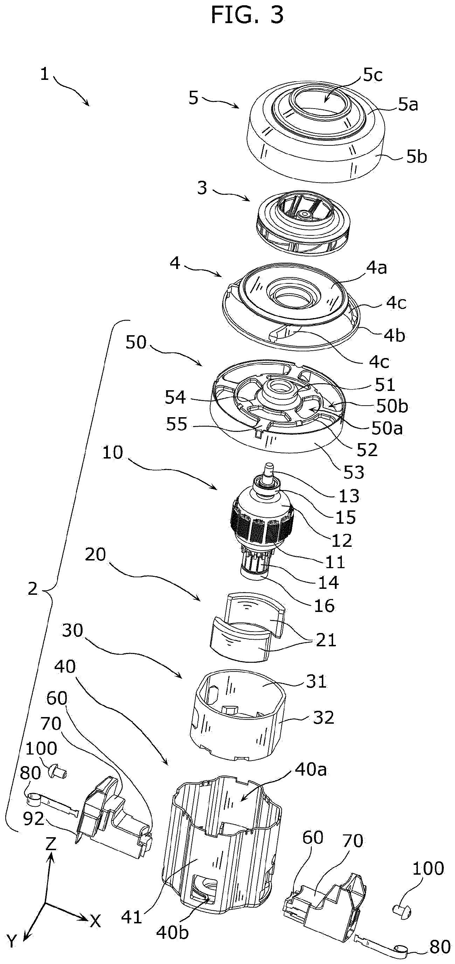

   FIG. 3 is an exploded perspective view of the electric blower according to the embodiment.
[FIG. 4]

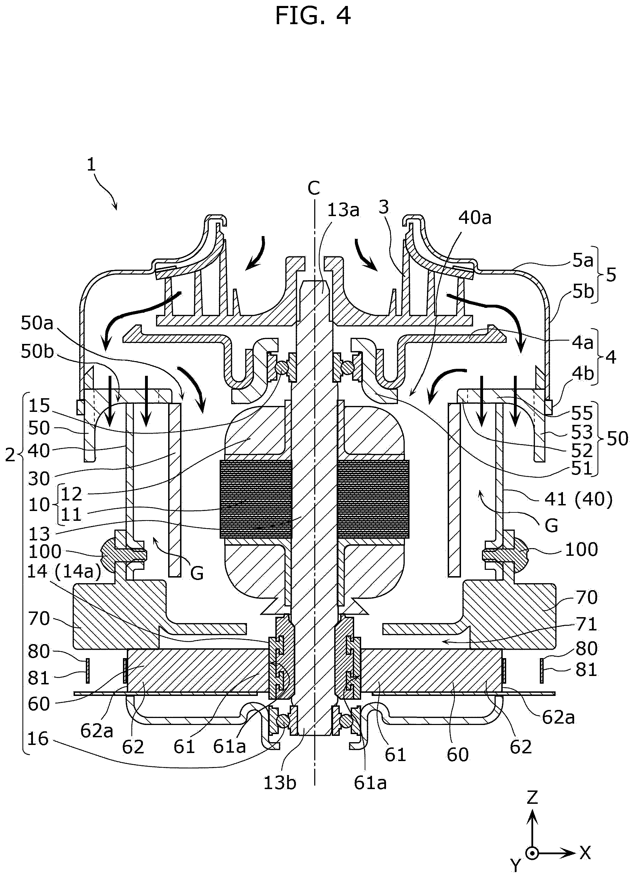

   FIG. 4 is a cross-sectional view of the electric blower according to the embodiment.
[FIG. 5]

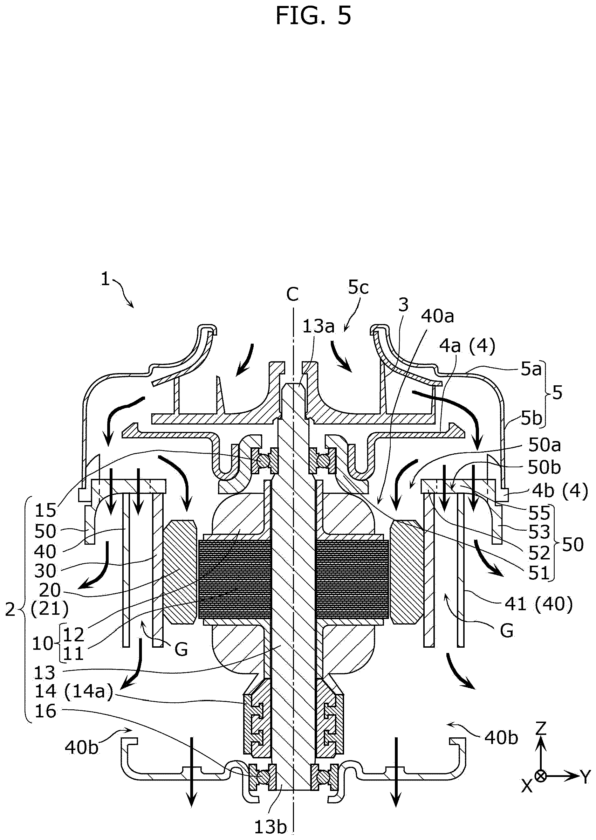

   FIG. 5 is a cross-sectional view of the electric blower according to the embodiment.
[FIG. 6]

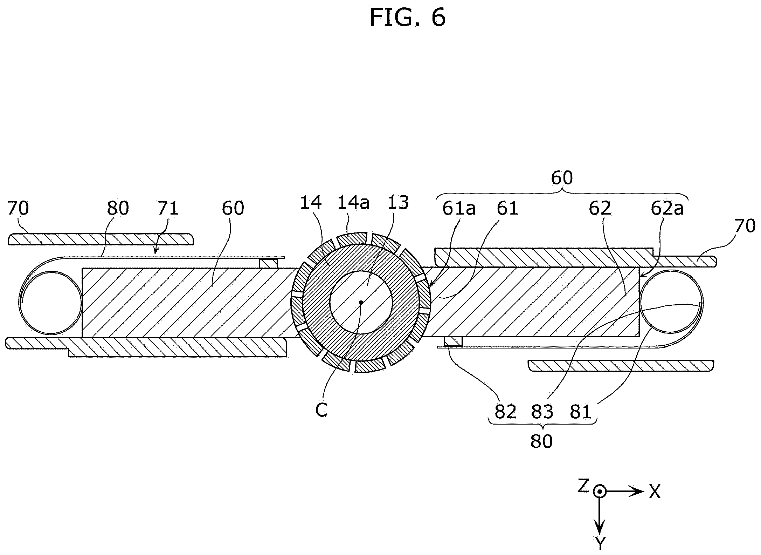

   FIG. 6 is a cross-sectional view of the electric blower according to the embodiment taken along a plane passing through a pair of brushes and perpendicular to an axial center of a shaft.
[FIG. 7]

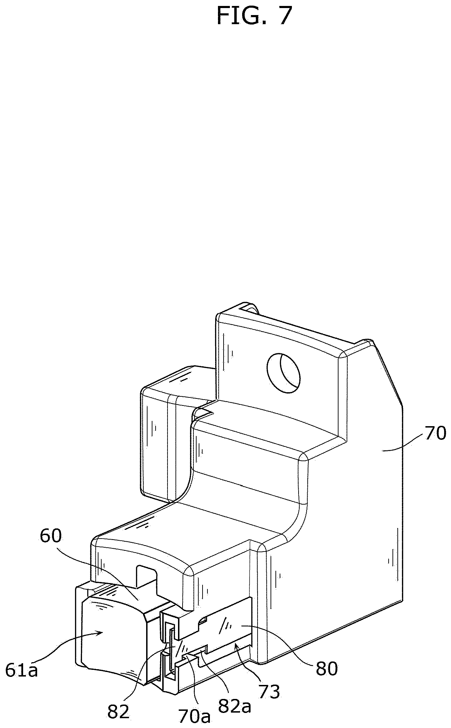

   FIG. 7 is a perspective view of a brush holder, in which a brush, a constant load spring, and a conductive wire are housed, when viewed from the front.
[FIG. 8]

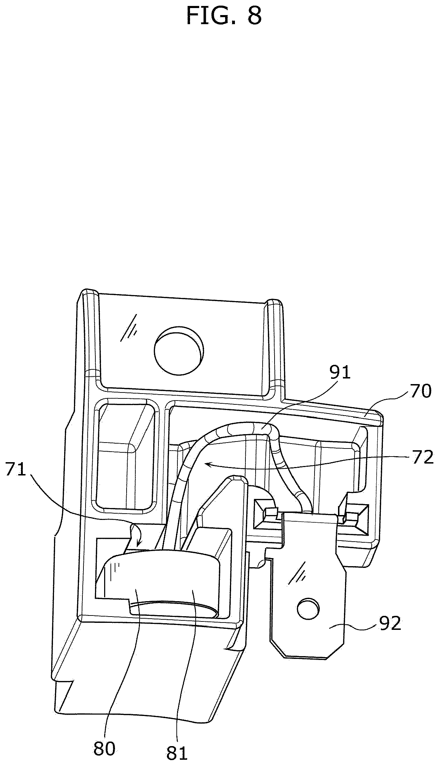

   FIG. 8 is a perspective view of the brush holder, in which the brush, the constant load spring, and the conductive wire are housed, when viewed from the rear.
[FIG. 9]

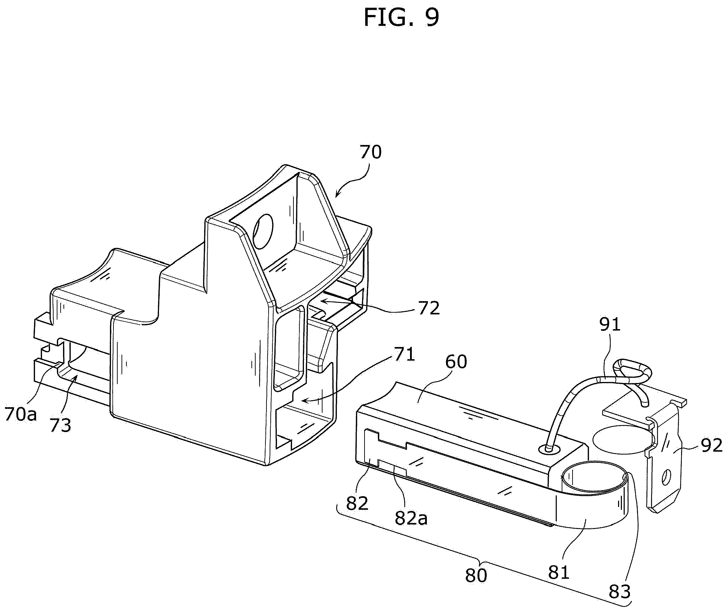

   FIG. 9 is an exploded perspective view of the brush, the brush holder, the constant load spring, the conductive wire, and an electrode terminal.
[FIG. 10A]

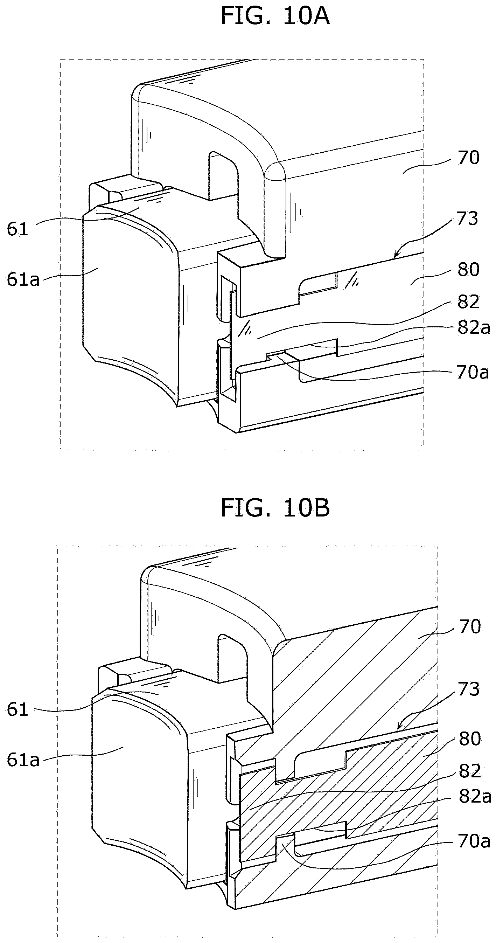

   FIG. 10A is an enlarged perspective view of a front portion of the brush holder in which the brush and the constant load spring are housed.
[FIG. 10B]
   FIG. 10B is a cross-sectional perspective view of the front portion of the brush holder in which the brush and the constant load spring are housed.
[FIG. 11]

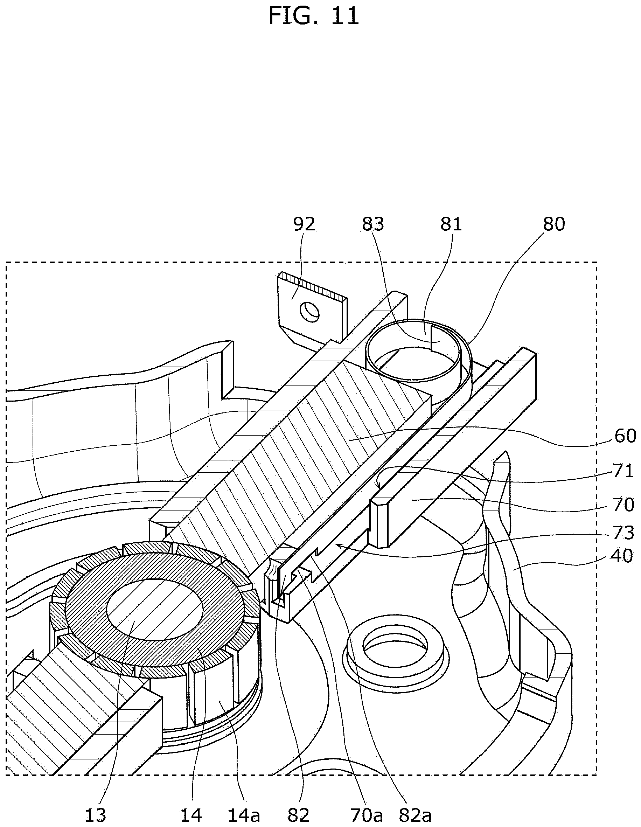

   FIG. 11 is a perspective view of a cross-section of peripheral portions of the brushes in the electric blower according to the embodiment taken along a plane passing through the pair of brushes and perpendicular to the axial center of the shaft.
[FIG. 12]

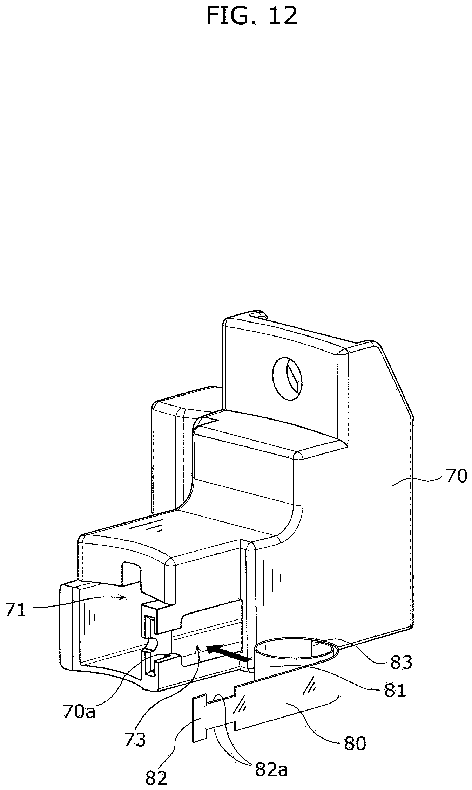

   FIG. 12 illustrates a state when the constant load spring is housed in the brush holder.
[FIG. 13]

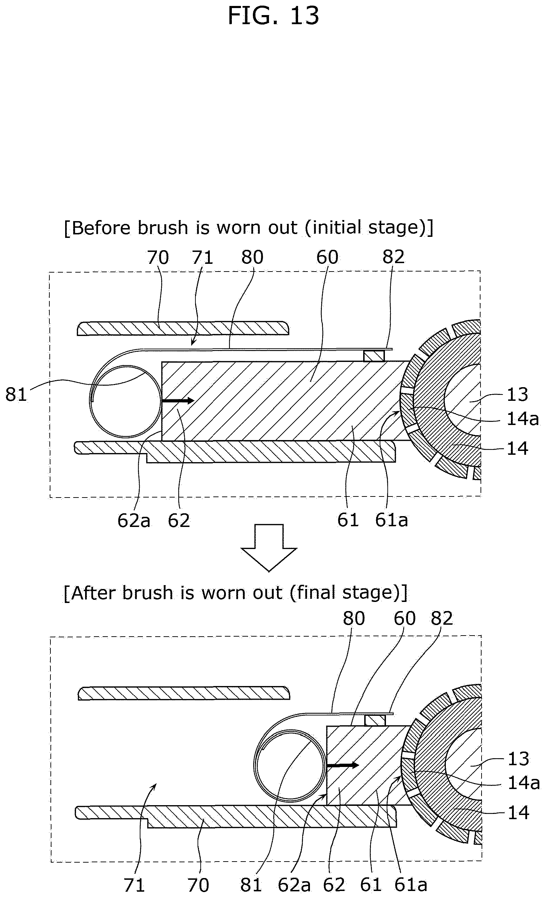

   FIG. 13 illustrates a state when the brush is worn out in the electric blower according to the embodiment.
[FIG. 14]

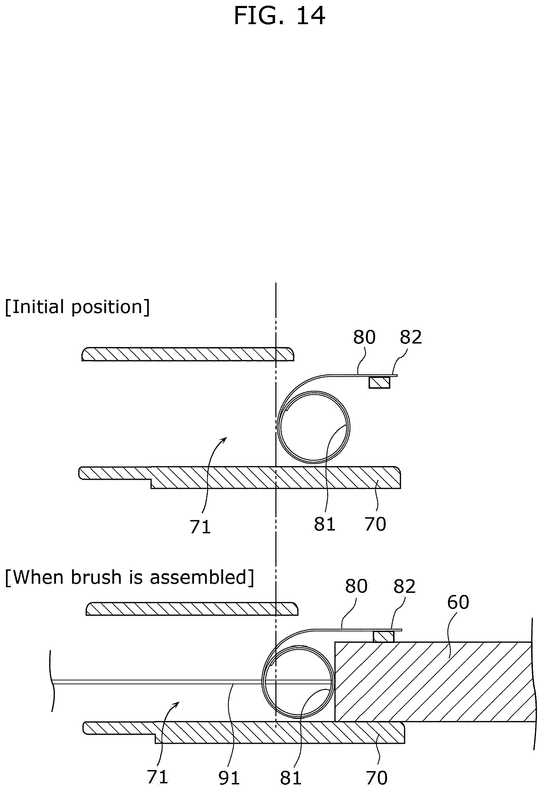

   FIG. 14 illustrates a length of the conductive wire connected to the brush in the electric blower according to the embodiment.

### [Description of Embodiment]

Hereinafter, an embodiment of the present disclosure will be described with reference to the drawings. It should be noted that the embodiment described below shows a specific example of the present disclosure. Accordingly, the numerical values, shapes, materials, structural components, arrangement positions and connection forms of the structural components, and the like shown in the following embodiment are examples, and are not intended to limit the present disclosure. Therefore, among the structural components in the following embodiment, the structural components not described in the independent claims are described as arbitrary structural components.

In the present description and drawings, the X, Y, and Z axes represent the three axes in a three-dimensional orthogonal coordinate system. The X and Y axes intersect at a right angle, and the X and Y axes each intersect the Z axis at right angles.

Note that the figures are schematic illustrations and are not necessarily precise depictions. In the figures, the components that are essentially the same share like reference signs. Accordingly, duplicate description is omitted or simplified. In the present embodiment, the direction along the Z-axis corresponds to the direction along axial center C of shaft 13.

### (Embodiment)

First, an overall configuration of electric blower 1 according to an embodiment will be described with reference to FIG. 1 to FIG. 5. FIG. 1 is a perspective view of electric blower 1 according to the embodiment when viewed from above, and FIG. 2 is a perspective view of electric blower 1 when viewed from below. FIG. 3 is an exploded perspective view of electric blower 1. FIG. 4 and FIG. 5 are cross-sectional views of electric blower 1 taken along a plane passing through axial center C of shaft 13. FIG. 4 illustrates a cross section (XZ cross section) taken along a plane passing through a pair of brushes 60, and FIG. 5 illustrates a cross section (YZ cross section) taken along a plane passing through a pair of magnets 21 of stator 20. Note that only the cross sections are illustrated in FIG. 4 and FIG. 5. In addition, the flow of air is indicated by arrows in FIG. 4 and FIG. 5.

As illustrated in FIG. 1 to FIG. 5, electric blower 1 includes: electric motor 2 including rotor 10 and stator 20; rotating fan 3 which is attached to shaft 13 of electric motor 2; air guide 4 into which air discharged by rotating fan 3 flows; and fan case 5 for housing rotating fan 3. Electric blower 1 can be used, for example, in an electric vacuum cleaner.

Electric motor 2 is a fan motor which rotates rotating fan 3. As an example, electric motor 2 is a direct current (DC) motor which uses a DC power source as an input. In the present embodiment, electric motor 2 is a brushed commutator motor.

Specifically, as illustrated in FIG. 3 to FIG. 5, electric motor 2 includes rotor 10, stator 20, yoke 30, frame 40, bracket 50, brushes 60, brush holders 70, and constant load springs 80. Rotor 10, stator 20, and yoke 30 are arranged in frame 40. The detailed configuration of each structural component of electric motor 2 will be described later.

Rotating fan 3 sucks air into the housing which includes frame 40 and fan case 5. As an example, rotating fan 3 is a centrifugal fan which is capable of providing a high suction pressure. Rotation of rotating fan 3 generates air pressure, air is sucked through suction port 5c of fan case 5, and air is discharged from rotating fan 3. The air discharged from rotating fan 3 flows into air guide 4. Rotating fan 3 is made of, for example, a resin material or a metal material, such as aluminum.

As an example, rotating fan 3 includes a first side plate with a suction port, a second side plate opposing the first side plate with a predetermined gap, and a plurality of fan blades sandwiched between the first side plate and the second side plate. Each of the fan blades has a plate shape curved in an arc shape, and the fan blades are arranged radially.

Air guide 4 has a function of forming an air flow path. For example, air guide 4 rectifies and discharges the air sucked through suction port 5c of fan case 5 by the rotation of rotating fan 3. The air discharged through air guide 4 flows into frame 40 via bracket 50. In the present embodiment, the air discharged through air guide 4 is not only discharged into frame 40, but also to the outside of frame 40 via bracket 50.

Air guide 4 includes main body portion 4a, annular portion 4b which has a circular ring shape and surrounds main body portion 4a with a gap from main body portion 4a, and a plurality of connecting plates 4c which connect main body portion 4a and annular portion 4b. The gap between main body portion 4a and annular portion 4b serves as a ventilation path.

Main body portion 4a is a disk body having a through-hole for fixation to central portion 51 of bracket 50. Annular portion 4b functions as a support which supports an end portion of side wall portion 5b of fan case 5 in the direction along axial center C (thrust direction) of shaft 13. Each of connecting plates 4c functions as a guide plate for forming an air flow path. Specifically, each of connecting plates 4c has a plate shape curved in an arc shape. Connecting plates 4c are arranged radially so as to swirl outward from the through-hole of main body portion 4a. Air guide 4 is made of, for example, a resin material, but may be made of a metal material.

Fan case 5 is a housing for housing rotating fan 3. In the present embodiment, fan case 5 is a cover which covers rotating fan 3 and air guide 4. As an example, fan case 5 is a metal cover made of a metal material, but may be a resin cover made of a resin material.

Fan case 5 includes lid portion 5a which covers the upper portions of rotating fan 3 and air guide 4, and side wall portion 5b which covers the side portions of rotating fan 3 and air guide 4. Fan case 5 also includes suction port 5c (suction port) for sucking outside air. In the present embodiment, suction port 5c is a circular through-hole provided in the central portion of lid portion 5a.

Fan case 5 is fixed to bracket 50. In the present embodiment, fan case 5 is fixed to bracket 50 via air guide 4. A fan case spacer having an opening corresponding to suction port 5c may be provided in suction port 5c of fan case 5.

In electric blower 1 configured as described above, rotation of rotor 10 included in electric motor 2 causes rotating fan 3 to rotate, so that air is sucked into fan case 5 through suction port 5c of fan case 5. Accordingly, air flows into rotating fan 3, and the air sucked into rotating fan 3 is compressed to a high pressure by the fan blades of rotating fan 3 and is discharged radially outward from the outer peripheral side of rotating fan 3. The air discharged from rotating fan 3 flows into air guide 4 along side wall portion 5b of fan case 5, and reaches bracket 50 through the ventilation path of air guide 4.

Part of the air that has reached bracket 50 flows into frame 40 through bracket 50, passes through frame 40, and is discharged to the outside of frame 40 through exhaust port 40b. In other words, the air that has flowed into frame 40 is discharged to the outside of electric blower 1 while cooling the heat generating components (windings and the like) of electric motor 2.

On the other hand, another part of the air that has reached bracket 50 is directly discharged to the outside of electric blower 1 through bracket 50 without passing through frame 40. Accordingly, the airflow can be discharged to the outside of electric blower 1 without causing a loss that is caused due to the air passing through frame 40.

Next, a detailed configuration of each component included in electric motor 2 will be described with reference to FIG. 3 to FIG. 5.

As illustrated in FIG. 4 and FIG. 5, rotor 10 is arranged on the inner side of stator 20 with a minute air gap between rotor 10 and stator 20. Rotor 10 rotates about axial center C of shaft 13. Rotor 10 rotates at a high speed, for example, at 50,000 rpm.

Rotor 10 according to the present embodiment is an inner rotor, and is arranged on the inner side of stator 20. Specifically, rotor 10 is surrounded by stator 20 with a minute air gap between rotor 10 and stator 20.

As an example, rotor 10 is an armature, and includes rotor core 11 and winding coil 12 wound around rotor core 11 via an insulator. Rotor 10 further includes shaft 13 and commutator 14. In FIG. 3 to FIG. 5, winding coil 12 is schematically illustrated.

Rotor core 11 is a stacked body in which a plurality of electromagnetic steel sheets are stacked in the direction along which axial center C of shaft 13 extends (rotational axis direction). Rotor core 11 includes a plurality of teeth portions. When current flows through winding coil 12, rotor core 11 (rotor 10) generates a magnetic force that acts on stator 20.

Shaft 13 is an axis of rotation about which rotor 10 rotates, and extends in the lengthwise direction which is the direction along axial center C. Shaft 13 is fixed to the center of rotor 10. Shaft 13 is, for example, a metal rod, and is fixed to rotor core 11 in a state of penetrating rotor core 11. For example, shaft 13 is fixed to rotor core 11 by press-fitting or shrink-fitting into the central hole of rotor core 11.

First portion 13a of shaft 13 protruding from rotor core 11 to one side is supported by first bearing 15. Second portion 13b of shaft 13 protruding from rotor core 11 to the other side is supported by second bearing 16. As an example, first bearing 15 and second bearing 16 are bearings that support shaft 13. In such a manner, shaft 13 is rotatably held by first bearing 15 and second bearing 16. First bearing 15 is fixed to bracket 50, and second bearing 16 is fixed to the bottom portion of frame 40. In other words, bracket 50 is a first bracket, and frame 40 is a second bracket.

In the present embodiment, first portion 13a of shaft 13 protrudes out of first bearing 15. Rotating fan 3 is attached to the tip portion of first portion 13a of shaft 13 protruding out of first bearing 15.

Commutator 14 is attached to shaft 13. Accordingly, commutator 14 rotates together with shaft 13. In the present embodiment, commutator 14 is attached to second portion 13b of shaft 13. In other words, commutator 14 is positioned on shaft 13, at a side opposite to rotating fan 3. Specifically, commutator 14 is arranged on shaft 13, between rotor core 11 and second bearing 16.

Commutator 14 includes a plurality of commutator pieces 14a arranged in a circular ring shape so as to surround shaft 13. Commutator pieces 14a are isolated from each other in the rotation direction of shaft 13. Each of commutator pieces 14a is electrically connected to winding coil 12.

Rotor 10 configured as described above rotates by the interaction between the magnetic flux generated by rotor core 11 (rotor 10) and the magnetic flux generated by stator 20.

As illustrated in FIG. 5, stator 20 is opposed to rotor 10. Specifically, stator 20 is opposed to rotor core 11, and is arranged on the outer peripheral side of rotor core 11 in the radial direction. In the present embodiment, stator 20 includes a plurality of magnets 21 arranged so as to be spaced apart from each other in the circumferential direction of rotor 10. Each of magnets 21 is a field magnet that creates a magnetic flux for generating torque, and is, for example, a permanent magnet having an S pole and an N pole. Each of magnets 21 has an arc shape having a substantially constant thickness when viewed from above.

In the present embodiment, stator 20 includes two magnets 21 which are opposed to each other via rotor 10. A minute air gap is present between the inner surface of each magnet 21 and the outer peripheral surface of rotor 10 (rotor core 11). Magnets 21 are fixed to yoke 30.

As illustrated in FIG. 5, yoke 30 surrounds magnets 21. Yoke 30 and magnets 21 form a magnetic circuit (field). Accordingly, yoke 30 may be regarded as part of stator 20. Yoke 30 has a tubular shape having a constant thickness, and entirely surrounds rotor 10 and stator 20 (magnets 21). Yoke 30 is made of a magnetic material, such as iron. Specifically, yoke 30 is made of an iron plate.

As illustrated in FIG. 3, in the present embodiment, yoke 30 has a tubular body whose outer peripheral shape and inner peripheral shape are substantially oval (racetrack shape) in the top view. Yoke 30 includes arc portions 31 and straight portions 32. In such a manner, by providing straight portions 32 in yoke 30 to make the cross-sectional shape of yoke 30 substantially oval, the magnetic path can be shortened as compared with a yoke having a circular cross-sectional shape (that is, a cylindrical yoke). Accordingly, the loss in yoke 30 (magnetic path) can be reduced.

A pair of magnets 21 are arranged on the inner sides of arc portions 31 of yoke 30. Specifically, each of magnets 21 has a shape corresponding to the inner peripheral surface of arc portion 31, and is arranged such that the outer peripheral surface of magnet 21 is in close contact with the inner peripheral surface of arc portion 31.

As illustrated in FIG. 1 to FIG. 3, frame 40 is a housing (case) for housing components that form electric motor 2, such as rotor 10 and stator 20. In the present embodiment, frame 40 is an outer case member (outer layer) of electric blower 1 and electric motor 2. Frame 40 is a bottomed tubular body having opening 40a. Yoke 30 housed in frame 40 and frame 40 are separate components. Accordingly, frame 40 and yoke 30 can be made of different materials. Specifically, frame 40 can be made of a non-magnetic material, while yoke 30 can be made of a magnetic material. Hence, frame 40 can be made of a light and durable metal material. In the present embodiment, frame 40 is made of aluminum.

As illustrated in FIG. 1 to FIG. 5, each of the side wall portion and the bottom portion of frame 40 includes a plurality of exhaust ports 40b for discharging the air sucked by the rotation of rotating fan 3. For example, the side wall portion of frame 40 includes a pair of exhaust ports 40b that are opposed to each other, and the bottom portion of frame 40 includes a pair of exhaust ports 40b that are opposed to each other.

Moreover, as illustrated in FIG. 4 and FIG. 5, gap G serving as a ventilation path in the direction of axial center C of shaft 13 (rotating axis direction) is provided between the outer surface of yoke 30 and the inner surface of frame 40. In the present embodiment, a plurality of gaps G are provided.

As illustrated in FIG. 1 to FIG. 3, frame 40 includes bulging portions 41 in which part of the side wall portion of frame 40 bulges outward in the radial direction (that is, outward in the radial direction centered on axial center C). Gap G is a spatial region between each bulging portion 41 and yoke 30. Bulging portion 41 extends in the direction in which axial center C of shaft 13 extends (rotational axis direction). Accordingly, gap G also extends in the direction in which axial center C of shaft 13 extends. Moreover, bulging portion 41 extends along the rotation direction of shaft 13 (rotation axis). Specifically, bulging portion 41 extends in an arc shape along the rotation direction of shaft 13. As an example, bulging portion 41 is a protruding rib, and can be formed, for example, by pressing the side wall portion of frame 40.

As illustrated in FIG. 4 and FIG. 5, bracket 50 covers opening 40a of frame 40. In the present embodiment, bracket 50 partially covers opening 40a of frame 40 without completely closing opening 40a of frame 40. In other words, with bracket 50 being attached to frame 40, the air rectified by air guide 4 flows into frame 40.

Specifically, bracket 50 includes a plurality of through-holes as openings through which the air rectified by air guide 4 passes. As illustrated in FIG. 3 to FIG. 5, in the present embodiment, bracket 50 includes inner through-holes 50a which are first through-holes positioned on the inner side in the radial direction and outer through-holes 50b which are second through-holes positioned on the outer side of inner through-holes 50a in the radial direction.

Bracket 50 further includes central portion 51, inner annular portion 52, and outer annular portion 53. Central portion 51 is a portion including the center of bracket 50. Inner annular portion 52 is a first circular annular portion which is positioned on the outer side of central portion 51 in the radial direction and surrounds central portion 51. Outer annular portion 53 is a second annular portion which is positioned on the outer side of inner annular portion 52 in the radial direction and surrounds inner annular portion 52.

Backet 50 further includes: inner bridge portions 54 (first bridge portions) which are first bridge portions positioned on the inner side in the radial direction; and outer bridge portions 55 which are second bridge portions positioned on the outer side of inner bridge portions 54 in the radial direction. Each of inner bridge portions 54 partition two inner through-holes 50a adjacent to each other in the rotation direction of shaft 13, and is laid between central portion 51 and inner annular portion 52. In other words, inner bridge portion 54 bridges central portion 51 and inner annular portion 52. Each of outer bridge portions 55 partitions two outer through-holes 50b adjacent to each other in the rotation direction of shaft 13, and is laid between inner annular portion 52 and outer annular portion 53. In other words, outer bridge portion 55 bridges inner annular portion 52 and outer annular portion 53.

Bracket 50 configured as described above is fixed to frame 40. For example, bracket 50 and frame 40 are fixed by joining the portions (recessed portions) between two adjacent bulging portions 41 of the side wall portion of frame 40 and bracket 50. As an example, bracket 50 and frame 40 can be fixed by crimping bracket 50 and frame 40.

Next, brush 60, brush holder 70, and constant load spring 80 will be described with reference to FIG. 3, FIG. 4, and FIG. 6 to FIG. 9. FIG. 6 is a cross-sectional view (XY cross-sectional view) of electric blower 1 taken along a plane passing through a pair of brushes 60 and perpendicular to axial center C of shaft 13. FIG. 7 and FIG. 8 are perspective views of brush holder 70 in the state where brush 60, constant load spring 80, and conductive wire 91 are housed in brush holder 70. FIG. 7 is a perspective view of brush holder 70 when viewed from the front, and FIG. 8 is a perspective view of brush holder 70 when viewed from the rear. FIG. 9 is an exploded perspective view of brush 60, brush holder 70, constant load spring 80, conductive wire 91, and electrode terminal 92.

As illustrated in FIG. 4, each brush 60 is in contact with commutator 14 in the radial direction intersecting with the direction of axial center C. Brush 60 is being pressed against commutator 14 upon an application of a pressing force from constant load spring 80. Specifically, brush 60 is provided so as to be movable in the radial direction with shaft 13 as the center of rotation and to be slidable to commutator 14 by the pressing force applied from constant load spring 80.

As illustrated in FIG. 6, a pair of brushes 60 are provided. The pair of brushes 60 are opposed to each other so as to sandwich commutator 14. In other words, brushes 60 are arranged so as to be opposite to each other with commutator 14 in between. In the present embodiment, brushes 60 are line-symmetrical about axial center C of shaft 13. Each of brushes 60 is an elongated member, and is arranged such that the lengthwise direction of brush 60 corresponds to the radial direction of rotation of shaft 13. As an example, brush 60 is elongated and substantially cuboid in shape.

Brushes 60 are power feeding brushes which supply electric power to rotor 10 by contacting commutator 14. Specifically, when brushes 60 contact commutator pieces 14a of commutator 14, the armature current supplied to brushes 60 flows to winding coil 12 of rotor 10 via commutator pieces 14a. Brushes 60 are made of conductive materials. As an example, brushes 60 are conductive carbon brushes made of carbon.

As illustrated in FIG. 4 and FIG. 6, each brush 60 includes front end portion 61 which is a first end portion in contact with commutator 14 and rear end portion 62 which is a second end portion positioned opposite to front end portion 61.

Front end portion 61 of brush 60 is one lengthwise end portion of brush 60, and is the tip portion of brush 60 closer to shaft 13 (on the inner side). Front end portion 61 includes front end surface 61a which serves as a contact surface that contacts commutator pieces 14a of commutator 14.

On the other hand, rear end portion 62 of brush 60 is the other lengthwise end portion of brush 60, and is the tip portion of brush 60 on the side opposite to shaft 13 (on the outer side). Rear end portion 62 includes rear end surface 62a which serves as a contact surface that contacts constant load spring 80.

As illustrated in FIG. 4, brush 60 is held by brush holder 70 so as to move in the radial direction intersecting with the direction of axial center C. In other words, brush holder 70 is a holder that holds brush 60. Brush holder 70 is fixed to frame 40. Specifically, brush holder 70 is inserted into the opening of frame 40 to be fixed to frame 40 by screws 100. The number of brush holders 70 varies depending on the number of brushes 60. Since two brushes 60 are provided in the present embodiment, two brush holders 70 are provided.

As illustrated in FIG. 7 and FIG. 8, brush holder 70 houses brush 60. Specifically, brush holder 70 includes through-hole 71 into which brush 60 is inserted. Brush holder 70 is made of, for example, an insulating resin material. In the present embodiment, brush holder 70 is a resin molded product formed by integral molding using a resin material.

Brush holder 70 further includes storage 72 for storing conductive wire 91. Storage 72 is a recessed portion (space) provided in brush holder 70. Conductive wire 91 stored in storage 72 is covered with insulating brush holder 70. This prevents an insulation failure from occurring between conductive wire 91 and peripheral components.

Conductive wire 91 is, for example, a pigtail wire. As illustrated in FIG. 8 and FIG. 9, conductive wire 91 has a first end portion connected to brush 60 and a second end portion connected to electrode terminal 92. Conductive wire 91 is arranged so as not to be present in the line of motion of brush 60 which slides. Specifically, the first end portion of conductive wire 91 is connected to a side surface of brush 60, and conductive wire 91 is routed so as not to interfere with brush 60 even when brush 60 is worn out by sliding. Accordingly, it is possible to prevent conductive wire 91 from hindering the sliding of brush 60. In the present embodiment, the connection position between conductive wire 91 and brush 60 is always located in front of the contact position between brush 60 and constant load spring 80 and behind the fixed position between brush holder 70 and constant load spring 80 even when brush 60 moves due to wear.

The length of conductive wire 91 is set long in consideration of the movement of brush 60 due to wear. Storage 72 has a structure in which conductive wire 91 is stored so as not to protrude out of brush holder 70 even before brush 60 is worn out. In other words, even if brush 60 moves due to wear, conductive wire 91 continues to be stored in storage 72 without protruding out of storage 72. As a result, even when conductive wire 91 is slack in the initial stage before brush 60 is worn out, it is possible to prevent an insulation failure from occurring between conductive wire 91 and peripheral components.

As illustrated in FIG. 8 and FIG. 9, electrode terminal 92 connected to conductive wire 91 is a power supply terminal that receives electric power to be supplied to winding coil 12 of rotor 10. In other words, electrode terminal 92 provides electric power to brush 60. The electric power supplied to electrode terminal 92 is supplied to brush 60 via conductive wire 91, and is supplied to winding coil 12 of rotor 10 via commutator pieces 14a. In the present embodiment, electrode terminal 92 is fixed to brush holder 70. Electrode terminal 92 is fixed to brush holder 70 so as not to be present in the line of motion of brush 60 sliding in the radial direction. As a result, the length of brush 60 can be increased as compared with the case where electrode terminal 92 is present in the line of motion of brush 60, so that the life of electric motor 2 can be extended.

Moreover, as illustrated in FIG. 6, brush holder 70 houses constant load spring 80. In other words, brush holder 70 holds not only brush 60 but also constant load spring 80. In the present embodiment, constant load spring 80 is placed in through-hole 71. The number of constant load springs 80 varies depending on the number of brushes 60. Since two brushes 60 are provided in the present embodiment, two constant load springs 80 are provided.

Constant load spring 80 is a brush spring for pressing brush 60 against commutator 14. Specifically, constant load spring 80 presses brush 60 against commutator 14 by applying a pressing force to brush 60. Constant load spring 80 is a spring that applies a uniform pressing force (load) to brush 60. In the present embodiment, constant load spring 80 is a spiral spring having a portion in which a wire rod is spirally wound. Constant load spring 80 is, for example, a mainspring made of a band-shaped wire rod made of a metal material or the like.

As illustrated in FIG. 6 and FIG. 9, constant load spring 80 includes coil portion 81 that is a portion in which a band-shaped wire rod is wound. Specifically, coil portion 81 is a portion in which a long and band-shaped metal plate is wound in only one direction. Constant load spring 80 further includes outer end portion 82 which is a first end portion of the band-shaped metal plate and inner end portion 83 which is a second end portion of the band-shaped metal plate. Outer end portion 82 is the tip portion on the outer peripheral side of the band-shaped metal plate pulled out from coil portion 81, and inner end portion 83 is the tip portion on the inner peripheral side of the band-shaped metal plate positioned inside coil portion 81.

Constant load spring 80 presses brush 60 against commutator 14 by coil portion 81. Specifically, in constant load spring 80, coil portion 81 is in contact with rear end portion 62 of brush 60. By applying a pressing force (spring force) to brush 60 by the spring elastic force (spring restoring force) of coil portion 81, brush 60 is biased to commutator 14.

As described above, as illustrated in FIG. 6, constant load spring 80 is housed in brush holder 70. Specifically, constant load spring 80 is arranged in through-hole 71 of brush holder 70 such that coil portion 81 is positioned behind rear end portion 62 of brush 60. Outer end portion 82 of constant load spring 80 is arranged in through-hole 71 of brush holder 70 so as to be pulled out along the lateral side of brush 60 toward commutator 14.

Constant load spring 80 is fixed to brush holder 70. Specifically, outer end portion 82 of constant load spring 80 is fixed to brush holder 70. In the present embodiment, constant load spring 80 is fixed to brush holder 70 by an engagement of outer end portion 82 of constant load spring 80 with brush holder 70. Specifically, as illustrated in FIG. 10A, FIG. 10B, and FIG. 11, outer end portion 82 of constant load spring 80 includes notched recessed portions 82a as first engagement portions, and brush holder 70 includes protruding portions 70a as second engagement portions. With such a configuration, recessed portions 82a of constant load spring 80 and protruding portions 70a of brush holder 70 are engaged with each other, so that constant load spring 80 is fixed to brush holder 70.

In the present embodiment, constant load spring 80 is fixed to brush holder 70 only at outer end portion 82, and constant load spring 80 is not fixed at the portions other than outer end portion 82. In other words, the portions of constant load spring 80 excluding outer end portion 82 are not supported, and are free. That is, constant load spring 80 is supported only on one position that is outer end portion 82.

Moreover, as illustrated in FIG. 7 and FIG. 9, brush holder 70 includes opening 73 into which coil portion 81 of constant load spring 80 can be inserted. Opening 73 is a through-hole provided on a side surface of brush holder 70, and is in communication with through-hole 71 in which brush 60 is placed. Opening 73 has, for example, a rectangular opening, and extends along the lengthwise direction of brush 60. By providing opening 73 in brush holder 70 in such a manner, constant load spring 80 can be easily arranged in brush holder 70.

Specifically, when constant load spring 80 is assembled into brush holder 70, as illustrated in FIG. 12, coil portion 81 of constant load spring 80 is inserted into brush holder 70 through opening 73, and recessed portions 82a of constant load spring 80 are hooked on protruding portions 70a of brush holder 70 so that recessed portions 82a and protruding portions 70a are engaged with each other. As a result, constant load spring 80 can be arranged in brush holder 70 in the state where outer end portion 82 is fixed to brush holder 70.

In electric motor 2 configured as described above, the armature current supplied to brush 60 flows through winding coil 12 of rotor 10 via commutator 14. As a result, a magnetic flux is generated in rotor 10, and the magnetic force generated by the interaction between the magnetic flux of rotor 10 and the magnetic flux generated from magnets 21 of stator 20 is turned into torque for rotating rotor 10, so that rotor 10 rotates. Then, as rotor 10 rotates, shaft 13 rotates, causing rotating fan 3 attached to shaft 13 to rotate.

Rotation of rotor 10 in the above manner causes front end portion 61 of brush 60 that contacts with commutator 14 to be worn out. At this time, brush 60 is being pressed against commutator 14 upon an application of a constant pressing force (load) from constant load spring 80 to brush 60. As a result, as illustrated in FIG. 13, as front end portion 61 of brush 60 is worn out due to the friction with commutator pieces 14a, brush 60 slides toward commutator 14 in through-hole 71 of brush holder 70. At this time, the wire rod of constant load spring 80 is wound as brush 60 becomes shorter due to wear. In other words, coil portion 81 approaches outer end portion 82.

In the present embodiment, as illustrated in FIG. 14, the length of conductive wire 91 is set such that constant load spring 80 applies a pressing force to brush 60 even when brush 60 is maximally worn out. In addition, the length of conductive wire 91 is set such that brush 60 is arranged at a position to which the load of constant load spring 80 starts to be applied from the initial position of constant load spring 80 before brush 60 is assembled.

With such a configuration, conductive wire 91 is stretched even when brush 60 is completely worn out. In other words, with the configuration, brush 60 is slid as desired. Hence, it is possible to prevent brush 60 from vibrating even when a gap is present between brush 60 and brush holder 70. Accordingly, electric motor 2 according to the present embodiment is capable of reducing a failure due to the vibration of brush 60. Specifically, the vibration of brush 60 may cause brush 60 to jump and become temporarily separated from commutator 14. When brush 60 is temporarily separated from commutator 14, the current flowing from brush 60 to commutator 14 is cut off, which causes problems such as sparks. However, the above configuration stabilizes the behavior of brush 60. In other words, conductive wire 91 according to the present embodiment has both a function of supplying electric power to brush 60 and a function of stably holding brush 60.

By setting the length of conductive wire 91 as described above, constant load spring 80 is always capable of applying pretension to brush 60 by using the spring properties of constant load spring 80. Accordingly, since the reaction force from brush 60 is applied to constant load spring 80, it is also possible to prevent constant load spring 80 from coming off from brush holder 70. With the above configuration, it is possible to prevent constant load spring 80 from coming off not only when electric motor 2 is driven, but also when electric motor 2 is assembled. In other words, electric motor 2 according to the present embodiment is capable of preventing constant load spring 80 from coming off from when electric motor 2 is assembled till the end of the life of brush 60.

As described above, in electric motor 2 and electric blower 1 according to the present embodiment, constant load spring 80 is used as a brush spring for pressing brush 60 against commutator 14. As a result, a constant load can be applied to brush 60, so that the initial force of the brush spring can be set small. Accordingly, it is possible to prevent the sliding loss of brush 60 from increasing at the initial stage due to an increase in friction between brush 60 and commutator 14. Hence, use of electric motor 2 according to the present embodiment prevents the efficiency and life of electric motor 2 from being reduced.

Moreover, in electric motor 2 and electric blower 1 according to the present embodiment, constant load spring 80 used as the brush spring includes coil portion 81 that contacts with rear end portion 62 (second end portion) of brush 60 and outer end portion 82 fixed to brush holder 70. As a result, constant load spring 80 can be supported on only one position that is outer end portion 82. Accordingly, even when constant load spring 80 is used as the brush spring, constant load spring 80 can be simply fixed to brush holder 70.

Moreover, in the present embodiment, constant load spring 80 is fixed to brush holder 70 by an engagement of outer end portion 82 of constant load spring 80 with brush holder 70.

As a result, constant load spring 80 can be simply fixed to brush holder 70.

Specifically, outer end portion 82 of constant load spring 80 includes notched recessed portions 82a, and brush holder 70 includes protruding portions 70a with which recessed portions 82a are engaged.

As a result, constant load spring 80 can be fixed to brush holder 70 by hooking recessed portions 82a of constant load spring 80 on protruding portion 70a of brush holder 70 for engagement.

### (Variations)

Although electric motor 2 and electric blower 1 according to the present disclosure have been described above based on the embodiment, the present disclosure is not limited to the above embodiment.

For example, in the above embodiment, as an example of the engagement structure in which brush holder 70 and constant load spring 80 are engaged with each other for fixation, brush holder 70 includes protruding portions 70a and outer end portion 82 of constant load spring 80 includes notched recessed portions 82a. However, the present disclosure is not limited to such an example. For example, it may be that brush holder 70 includes recessed portions, and outer end portion 82 of constant load spring 80 includes protruding portions, and the recessed portions and the protruding portions are engaged with each other so that outer end portion 82 of constant load spring 80 is fixed to brush holder 70.

Moreover, instead of the engagement structure in which the notched recessed portions and the protruding portions are engaged with each other, an engagement structure may be used in which through-holes and protruding portions are engaged with each other. For example, outer end portion 82 of constant load spring 80 may be fixed to brush holder 70 by providing a protruding portion on the side surface or the like of brush holder 70 and a through-hole in outer end portion 82 of constant load spring 80 to engage the protruding portion of brush holder 70 with the through-hole of constant load spring 80.

The method of fixing constant load spring 80 and brush holder 70 is not limited to the engagement structure, but brush holder 70 and outer end portion 82 of constant load spring 80 may be fixed to each other by a method other than the engagement structure.

In the above embodiment, although stator 20 includes magnets 21, the present disclosure is not limited to such an example. For example, stator 20 may include a stator core and a winding coil wound around the stator core. In such a case, since a yoke portion is formed on the stator core, yoke 30 functions as an auxiliary yoke.

In the above embodiment, although the case has been described where electric blower 1 is used for an electric vacuum cleaner, the present disclosure is not limited to such an example. For example, electric blower 1 may be used for an air towel or the like.

Moreover, in the above embodiment, although the example has been described in which electric motor 2 is used for electric blower 1, the present disclosure is not limited to such an example. Electric motor 2 may be used for an electric device other than electric blower 1. Electric motor 2 is not limited to be used for household equipment, but may be used for industrial equipment such as automobile equipment.

In addition, a form obtained by applying various modifications to the above embodiment that can be conceived by a person skilled in the art, or a form realized by arbitrarily combining the structural components and functions in the embodiment without departing from the spirit of the present disclosure is also included in the present disclosure.

### [Industrial Applicability]

The electric motor and the electric blower according to the present disclosure can be used for various electric devices including household electric appliances such as vacuum cleaners.

### [Reference Signs List]

- 1: Electric blower
- 2: Electric motor
- 3: Rotating fan
- 4: air guide
- 4a: Main body portion
- 4b: annular portion
- 4c: connecting plate
- 5: fan case
- 5a: lid portion
- 5b: side wall portion
- 5c: suction port
- 10: rotor
- 11: rotor core
- 12: winding coil
- 13: shaft
- 13a: first portion
- 13b: second portion
- 14: commutator
- 14a: commutator piece
- 15: first bearing
- 16: second bearing
- 20: stator
- 21: magnet
- 30: yoke
- 31: arc portion
- 32: straight portion
- 40: frame
- 40a: opening
- 40b: exhaust port
- 41: bulging portion
- 50: bracket
- 50a: inner through-hole
- 50b: outer through-hole
- 51: central portion
- 52: inner annular portion
- 53: outer annular portion
- 54: inner bridge portion
- 55: outer bridge portion
- 60: brush
- 61: front end portion
- 61a: front end surface (first end portion)
- 62: rear end portion
- 62a: rear end surface (second end portion)
- 70: brush holder
- 70a: protruding portion
- 71: through-hole
- 72: storage
- 73: opening
- 80: constant load spring
- 81: coil portion
- 82: outer end portion
- 82a: recessed portion
- 83: inner end portion
- 91: conductive wire
- 92: electrode terminal
- 100: screw

## Claims

1. An electric motor, comprising:
a rotor which includes a shaft and a commutator, the shaft extending in an axial center direction, the commutator being attached to the shaft;
a brush which includes a first end portion and a second end portion in a radial direction that intersects with the axial center direction, the first end portion being in contact with the commutator, the second end portion being positioned opposite to the first end portion;
a brush holder which holds the brush such that the brush moves in the radial direction; and
a constant load spring which presses the brush against the commutator,
wherein the constant load spring includes a coil portion and an outer end portion, the coil portion being in contact with the second end portion of the brush, the outer end portion being fixed to the brush holder.

2. The electric motor according to claim 1,
wherein the constant load spring is fixed to the brush holder by the outer end portion of the constant load spring being engaged with the brush holder.

3. The electric motor according to claim 2,
wherein the outer end portion of the constant load spring includes a notched recessed portion, and
the brush holder includes a protruding portion with which the notched recessed portion is engaged.

4. The electric motor according to any one of claims 1 to 3, further comprising:
a conductive wire which includes a first end portion connected to the brush and a second end portion connected to an electrode terminal for supplying electric power to the brush,
wherein a length of the conductive wire is set such that the constant load spring applies a pressing force to the brush even when the brush is maximally worn out.

5. The electric motor according to claim 4,
wherein the brush holder includes a storage which stores the conductive wire, and
the conductive wire is arranged so as not to be present in a line of motion of the brush moving in the radial direction.

6. The electric motor according to claim 5,
wherein the storage has a structure in which the conductive wire is stored so as to prevent the conductive wire from protruding out of the brush holder in a state before the brush is worn out.

7. The electric motor according to any one of claims 4 to 6,
wherein the electrode terminal is fixed to the brush holder so as not to be present in a line of motion of the brush moving in the radial direction.

8. The electric motor according to any one of claims 1 to 7,
wherein the brush holder includes an opening into which the coil portion of the constant load spring is insertable.

9. The electric motor according to any one of claims 1 to 8,
wherein the constant load spring is a spiral spring having a portion in which a band-shaped wire rod is spirally wound as the coil portion.

10. An electric blower, comprising:
the electric motor according to any one of claims 1 to 9; and
a rotating fan attached to the shaft of the electric motor.
